# EUROPEAN PATENT APPLICATION

(11) **EP 4 647 324 A1**
(43) Date of publication of application: **12.11.2025**
(21) Application number: 23914534.5
(22) Date of filing: 25.12.2023
(51) Int. Cl.: B62D 25/14

(54) **CROSS CAR BEAM AND VEHICLE COMPRISING SAME**

(30) Priority: 03.01.2023 CN 202310002472
(71) Applicant: Yanfeng International Automotive Technology Co., Ltd., Shanghai 201306 (CN)
(72) Inventor: ZHANG, Yiyun, Shanghai 201315 (CN); ZHANG, Junwei, Shanghai 201315 (CN); JIN, Ze, Shanghai 201315 (CN); SHI, Jie, Shanghai 201315 (CN)
(74) Representative: Meissner Bolte Partnerschaft mbB
(86) International application number: PCT/CN2023/141491
(87) International publication number: WO 2024/146402

(57) **Abstract**

The present invention relates to an instrument panel beam and a vehicle including the same. The instrument panel beam includes: a beam body including a first end and a second end, the first end and the second end being adapted to be connected to a left-side periphery and a right-side periphery of a vehicle body, respectively; and a plurality of brackets extending from the beam body between the first end and the second end, and at least one of the plurality of brackets being adapted to be connected with the vehicle body, wherein at least one of the plurality of brackets is made of plastic and is configured as a tubular structure having a closed cross-section to form a hollow portion. The at least one plastic bracket of the instrument panel beam according to the present invention has high mechanical properties and is easy to manufacture, so that the instrument panel beam is less expensive to manufacture and has a smaller volume and weight.

## Description

### Technical Field

The present invention relates to the field of vehicle interiors, and more particularly, to an instrument panel beam and a vehicle including the same.

### Background Art

In recent years, with the vigorous development of new energy vehicles and the urgent global demand for carbon emission reduction, vehicle light-weighting has become a key focus area in the design and development processes of main engine plants and supporting suppliers. Traditional instrument panel beam products are predominantly constructed from metallic materials such as structural steel or aluminum alloys. As a critical structural component in vehicles, the instrument panel beam not only supports interior trim parts including the instrument panel and center console, but also provides a certain degree of passenger protection during collisions. Consequently, unlike ordinary decorative components, it must meet stringent requirements in terms of modal characteristics, stiffness, and strength.

Prior art already includes technical solutions for achieving instrument panel beam light-weighting through hybrid structures combining plastic and metal components. For example, Chinese patent document CN110239632A discloses an instrument panel beam formed by integrated insert injection molding of a metal main beam member with plastic materials to achieve weight reduction.

However, as the primary load-bearing part within the instrument panel assembly, the instrument panel beam incorporates multiple bracket features, in addition to the beam body, for mounting various components of the instrument panel assembly. Historical design experience demonstrates that among these, the floor-connected bracket plays an exceptionally critical role in determining the overall performance of the instrument panel beam product. In the insert injection molded instrument panel beam disclosed in CN110239632A, the floor-connected bracket is also injection-molded. To satisfy mold manufacturing requirements, its cross-section is typically designed in U-shaped, horseshoe-shaped, or arched configurations to facilitate demolding. Due to inherent limitations of plastic materials (low density and modulus), achieving performance parity with conventional steel brackets necessitates material compensation strategies, such as adding ribs on both sides of U-shaped plastic brackets to enhance stiffness of the floor-connected bracket. This additional material increases the final product's weight, thereby preventing further mass reduction while maintaining performance standards, ultimately limiting progress toward light-weighting objectives.

### Summary of the Invention

It is an objective of the present invention to provide an instrument panel beam, the at least one plastic bracket of the instrument panel crossbeam according to the present invention has high mechanical properties and is easy to manufacture, so that the instrument panel crossbeam is less expensive to manufacture and has a smaller volume and weight.

To this end, a first aspect of the present invention provides an instrument panel beam, including: a beam body including a first end and a second end, the first end and the second end being adapted to be connected to a left-side periphery and a right-side periphery of a vehicle body, respectively; and a plurality of brackets extending from the beam body between the first end and the second end, and at least one of the plurality of brackets being adapted to be connected with the vehicle body, wherein at least one of the plurality of brackets is made of plastic and is configured as a tubular structure having a closed cross-section to form a hollow portion.

According to an alternative embodiment of the present invention, the plurality of brackets include a first bracket provided adjacent to the first end of the crossbeam body, and the first bracket is adapted to be connected to a front periphery and a steering column of the vehicle body.

According to an alternative embodiment of the present invention, the plurality of brackets include a second bracket provided adjacent to a central portion of the beam body, and the second bracket is adapted to be connected to the front periphery of the vehicle body.

According to an alternative embodiment of the present invention, the plurality of brackets include a third bracket and a fourth bracket provided adjacent to a central portion of the beam body, the third bracket and the fourth bracket being adapted to extend toward a floor of the vehicle body, and at least one of the third bracket and the fourth bracket being adapted to be connected to the floor.

According to an alternative embodiment of the present invention, the plurality of brackets include a fifth bracket provided at a second end of the beam body, the fifth bracket being adapted to mount a passenger side airbag.

According to an alternative embodiment of the present invention, the tubular structure is formed by one of water-assisted injection molding, water-assisted injection molding with projectile, gas-assisted injection molding, and gas-assisted and water-assisted combined injection molding.

According to an alternative embodiment of the present invention, the closed cross-section of the tubular structure is shaped as a geometric figure including one of a circle, an ellipse, a rectangle, a triangle, and a polygon.

According to an alternative embodiment of the present invention, the shape of the closed cross-section of the tubular structure is an irregular shape with concave and/or convex features.

According to an alternative embodiment of the present invention, the tubular structure includes reinforcing ribs provided in at least a partial area outside the closed cross-section.

According to an alternative embodiment of the present invention, the plurality of brackets include a floor-connected bracket provided adjacent to a central portion of the beam body, the floor-connected bracket being adapted to connect to a floor of the vehicle body and support the central portion of the beam body, the floor-connected bracket being made of plastic and configured in the tubular structure.

According to an alternative embodiment of the present invention, the floor-connected bracket is integrally formed with the beam body.

According to an alternative embodiment of the present invention, the beam body has a non-closed cross-section and includes a plastic beam member and a metal beam member embedded in the plastic beam member, the plastic beam member being adapted to be connected to a left-side periphery and a right-side periphery of the vehicle body, respectively, and the metal beam member being adapted to be connected to at least one of the left-side periphery and the right-side periphery of the vehicle body.

According to an alternative embodiment of the present invention, the shape of the non-closed cross-section of the beam body includes one or more of a U-shape, a C-shape, a W-shape, a V-shape, and an Ω-shape.

According to an alternative embodiment of the present invention, at least a partial area of the metal beam member is covered by the plastic beam member.

According to an alternative embodiment of the present invention, a connection location of the beam body to at least one of the tubular structures in the plurality of brackets is provided with a through hole aligned with the closed cross-section of the tubular structure.

According to an alternative embodiment of the present invention, the beam body includes a tubular portion aligned with and integrally connected to at least one of the tubular structures in the plurality of brackets via the through hole.

According to an alternative embodiment of the present invention, the beam body further includes a support provided at a connection location of the plastic beam member and at least one of the tubular structures in the plurality of brackets, the support passing through the metal beam member and being provided between the metal beam member and the tubular portion of the plastic beam member.

According to an alternative embodiment of the present invention, the metal beam is provided with a plurality of openings adapted for the passage of gas to form a plurality of recesses between the metal beam and the tubular portion of the plastic beam member.

According to an alternative embodiment of the present invention, an end of at least one of the plurality of brackets connected to the beam body is bent toward a direction deviated from the beam body such that the tubular structure is connected to the beam body outside the closed cross-section.

According to an alternative embodiment of the present invention, the beam body is made of plastic and is configured as a tube beam having a closed cross-section to form a hollow portion.

According to an alternative embodiment of the present invention, the hollow portion of the beam body is connected to the hollow portion of at least one of the tubular structures of the plurality of brackets.

According to an alternative embodiment of the present invention, an end of at least one of the plurality of brackets connected to the beam body is bent toward a direction deviated from the beam body such that the hollow portion of the beam body and the hollow portion of the tubular structure are independent from each other.

According to an alternative embodiment of the present invention, an end of at least one of the tubular structures in the plurality of brackets away from the beam body is provided with a connected projection for mounting a fastener.

A second aspect of the present invention provides a vehicle including an instrument panel beam according to the first aspect of the present invention.

In comparison with the prior art, the instrument panel beam according to the present invention has several advantageous effects, in particular: on the basis of the existing instrument panel beam products, the design form of at least one plastic bracket extending from the beam body is improved to be constructed into a tubular structure with a closed cross-section, so that the weight can be reduced while satisfying the rigidity requirements, and the effect of reducing the carbon emission during production and use can be achieved; in addition, the instrument panel beam is simple in structure, occupies a small space, and has a low manufacturing cost, so that it can be widely used in various types of vehicles.

### Brief Description of the Drawings

Other features and advantages of the present invention will be better understood from the following detailed description of the preferred embodiments, taken in conjunction with the accompanying drawings. In the drawings, the same reference numerals refer to the same or similar parts.
FIG. 1A is a schematic diagram of a vehicle including an instrument panel beam according to an embodiment of the present invention;
FIG. 1B is a schematic diagram of an interior of a vehicle of FIG. 1A;
FIG. 2 is a schematic perspective diagram of a first embodiment of an instrument panel beam according to the present invention;
FIG. 3 is an exploded schematic diagram of an instrument panel beam of FIG. 2;
FIG. 4 is a front schematic diagram of an instrument panel beam of FIG. 2;
FIG. 5 is a schematic cross-sectional diagram taken along plane A-A in FIG. 4;
FIG. 6A is a partially enlarged schematic diagram of a first configuration of region D in FIG. 5;
FIG. 6B is a partially enlarged schematic diagram of a second configuration of region D in FIG. 5;
FIG. 6C is a partially enlarged schematic diagram of a third configuration of region D in FIG. 5;
FIG. 7A is a partially enlarged schematic diagram of a first configuration of region E in FIG. 5;
FIG. 7B is a partially enlarged schematic diagram of a second configuration of region E in FIG. 5;
FIG. 7C is a partially enlarged schematic diagram of a third configuration of the region E in FIG. 5;
FIG. 8A is a first schematic cross-sectional diagram taken along plane B-B in FIG. 4;
FIG. 8B is a second schematic cross-sectional diagram taken along plane B-B in FIG. 4;
FIG. 8C is a third schematic cross-sectional diagram taken along plane B-B in FIG. 4;
FIG. 9 is a front schematic diagram of a second embodiment of an instrument panel beam according to the present invention;
FIG. 10 is a schematic cross-sectional diagram taken along plane C-C in FIG. 9;
FIG. 11A is a partially enlarged schematic diagram of a first configuration of region F in FIG. 10; and
FIG. 11B is a partially enlarged schematic diagram of a second configuration of region F in FIG. 10.

It is to be understood that the drawings are designed not only for purposes of illustration and description of the present invention, but also contributes to the limitation of the present invention if necessary.

### Detailed Description of the Invention

The implementation and use of the embodiments are discussed in detail below. It is to be understood, however, that the specific embodiments discussed are merely illustrative of specific ways of carrying out and using the present invention, and are not intended to limit the scope of the present invention.

The words "upper", "lower", "front", "rear", "left", "right", etc. indicating directions are not absolute, but relative in describing the structural positions of the respective components herein. For example, when the individual components are arranged as shown in the drawings, these directional expressions are appropriate, but when the positions of the individual components in the drawings are changed, these directional expressions also change accordingly.

Further, as used herein, the terms "mounted", "connected", etc. are to be construed broadly unless expressly specified or limited otherwise. For example, the "connected" may be a fixed connection, or may be a detachable connection, or may be integral; it may be a direct connection or an indirect connection, or it may be associated by some action. For a person skilled in the art, the specific meaning of the above terms herein may be appreciated according to specific situations.

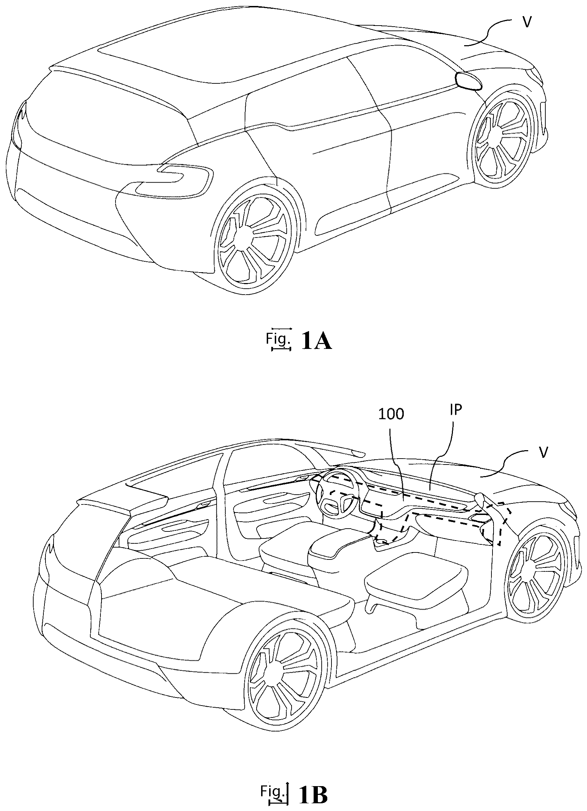

FIGS. 1A and 1B schematically illustrate a typical vehicle V. As shown in FIGS. 1A and 1B, the vehicle V includes an instrument panel IP and an instrument panel beam 100 that is provided inside the instrument panel IP.

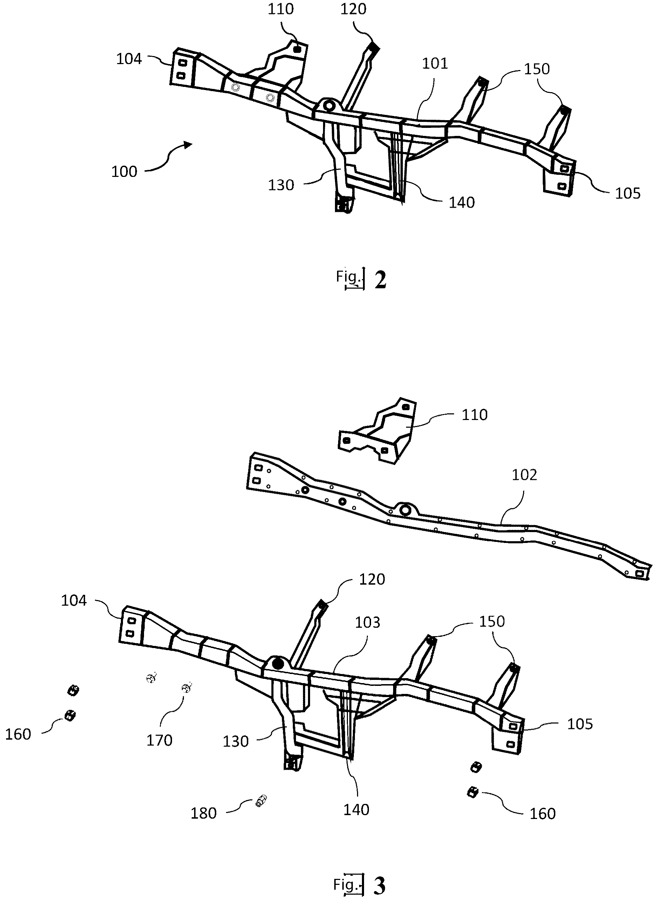

FIGS. 2 to 8C show an instrument panel beam 100 according to a first embodiment of the present invention.

As shown in FIGS. 2 to 4, the instrument panel beam 100 includes a beam body 101 and a plurality of brackets provided on the beam body 101 for mounting and/or connection. The beam body 101 includes a first end 104 connected to a left-side periphery of a vehicle body V and a second end 105 connected to a right-side periphery of the vehicle body, the brackets extend from the beam body 101 between the first end 104 and the second end 105 of the beam body 101, and at least one of the brackets is connected to the vehicle body, for example, at least one of a floor, a front periphery, a steering column, a left-side periphery, and a right-side periphery of the vehicle body. It will be appreciated that the connection of the bracket to the vehicle body includes, but is not limited to, direct connected to the vehicle body via fasteners (e.g., bolts), indirect connected to the vehicle body via other components, and the like.

In this first embodiment, the beam body 101 has a non-closed cross-section having a shape including, but not limited to, one or more of a U-shape, a C-shape, a W-shape, a V-shape, and an Ω-shape, and includes a plastic beam member 103 and a metal beam member 102 embedded in the plastic beam member 103, that is, the beam body 101 is made of the metal beam member 102 and the plastic beam member 103 by insert injection molding. The plastic beam member 103 includes a first end 104 connected to the left-side periphery of the vehicle body and a second end 105 connected to the right-side periphery of the vehicle body, and the metal beam 102 may be connected to only one of the left-side periphery and the right-side periphery or may be connected to the left-side periphery and the right-side periphery, respectively. It will be appreciated that in other embodiments, the beam body 101 may be an all- plastic beam member.

The brackets used for mounting and/or connection include, but are not limited to: the first bracket 110, the second bracket 120, the third bracket 130, the fourth bracket 140, and the fifth bracket 150. The first bracket 110 is provided adjacent to the first end 104 of the beam body 101 and extends from the beam body 101 toward the front periphery, the first bracket 110 and the beam body 101 being bolted or insert injection molded for connection with the front periphery and the steering column. The second bracket 120 is provided adjacent to a central portion of the beam body 101 and extends from the beam body 101 toward the front periphery for connection with the front periphery. The third bracket 130 and the fourth bracket 140 are provided adjacent to the central portion of the beam body 101 and extend from the beam body 101 toward the center tunnel floor, and the third bracket 130 is closer to the first end 104 of the beam body 101 than the fourth bracket 140, where the third bracket 130 is used to connect with the center tunnel floor and support the central portion of the beam body 101, and the fourth bracket 140 may or may not be connected with the floor but is used to reinforce the instrument panel beam 100. The fifth bracket 150 is provided adjacent to the second end 105 of the beam body 101 and serves to mount the passenger side airbag.

The third bracket 130 and the fourth bracket 140 thus divide the instrument panel beam 100 into three sections: a driving side section on the left-side of the third bracket 130; a center section between the third bracket 130 and the fourth bracket 140; and a copilot side section on the right-side of the fourth bracket 140. It will be appreciated that other corresponding brackets may also be provided depending on the actual installation and/or connection requirements. In addition, the instrument panel beam 100 also includes components for mounting or assembly, such as bushings 160, bolts 170, nuts 180, etc.

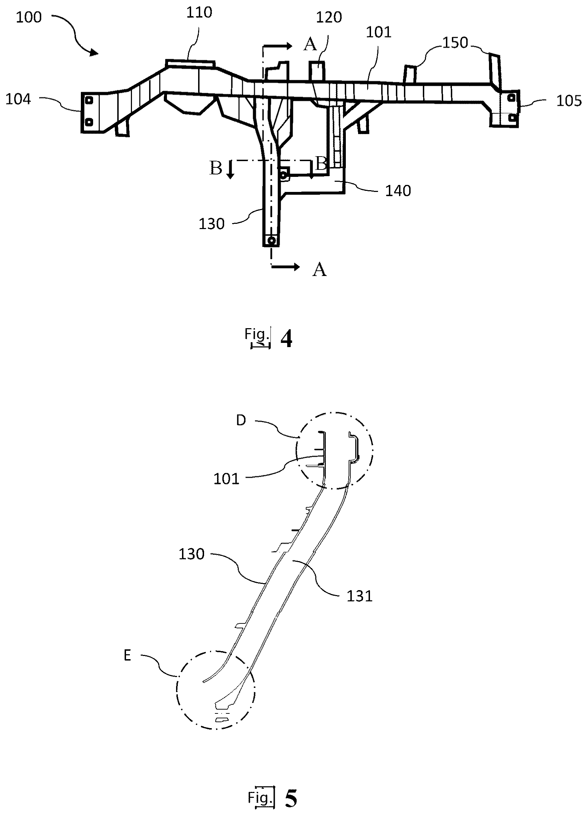

As shown particularly in FIG. 5, in this embodiment, the third bracket 130 (i.e., the floor-connected bracket) is made of plastic and is constructed in a tubular structure having a closed cross-section to form a hollow portion 131. For example, the third bracket 130 is integrally injection-molded with the plastic beam member 103, wherein the hollow portion 131 of the third bracket 130 is formed by one of water-assisted injection molding, water-assisted injection molding with projectile, gas-assisted injection molding, and gas-assisted and water-assisted combined injection molding. That is, in the injection molding process, the material inside the third bracket 130 is extruded to form the hollow portion 131 by using a high-pressure water flow, a water flow with a projectile, an air flow, or the like, whereby it is possible to overcome the drawback of the tubular structure having a closed cross-section that demolding is difficult to achieve in the conventional injection molding process. It will be appreciated that several of the above-mentioned processes may be used primarily to form tubular structures having curved features in a plane or space; for linear tubular structures, this can also be achieved by using a core-pulling/sliding block in a conventional injection mold.

Furthermore, it will also be appreciated that the bracket forming the tubular structure having the closed cross-section is not limited to the third bracket 130, and that any one or more of the above-mentioned five brackets for mounting and/or connected may be formed by a variety of injection molding processes as described above, according to other implementation variations not shown. That is, according to the present invention, at least one of the brackets is a plastic tubular bracket integrally formed with the plastic beam member 103, and the material of the remaining brackets is not limiting and may be metal, plastic, or a combination of both. In fact, since at least a partial region of the metal beam 102 is covered by the plastic beam member 103, the parts of the first bracket 110, the second bracket 120, the third bracket 130, the fourth bracket 140, the fifth bracket 150, the bushings 160, the bolts 170, the nuts 180, the metal beam 102, and the plastic beam member 103 can be combined with each other through an insert injection molding process to form the entire instrument panel beam 100.

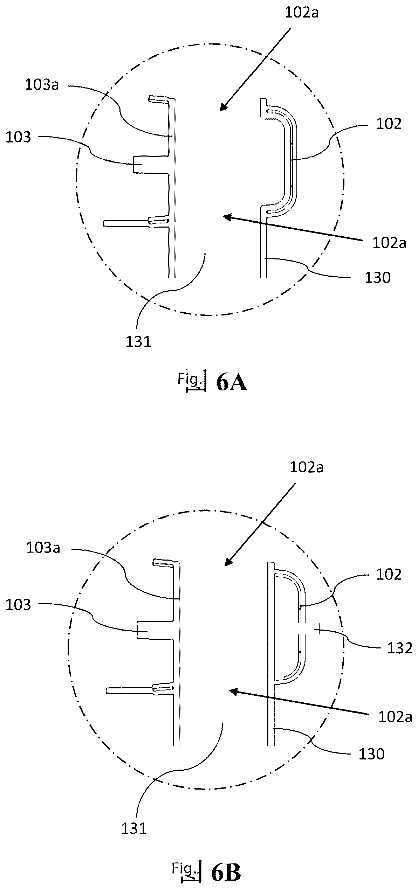

FIGS. 6A to 6C respectively show three different configurations of the instrument panel beam 100 according to the first embodiment at the connection location of the third bracket 130 and the beam body 101.

In the configuration shown in FIG. 6A, both the inside and the outside of the metal beam member 102 having a substantially C-shaped cross-section are fitted with the plastic beam member 103 by insert injection molding, that is, the plastic beam member 103 is completely covered with the metal beam member 102 by insert injection molding. According to a non-illustrated embodiment variant, the inner side of the metal beam member 102 is fitted with the plastic beam member 103 by means of insert injection molding, while the outer side of the metal beam member 102 is free of plastic material, i.e., the plastic beam member 103 may cover only the inner side of the metal beam member 102.

In addition, at the connection location of the beam body 101 and the third bracket 130, the metal beam member 102 is provided at both upper and lower C-shaped side edges thereof with through holes 102a aligned with the closed cross-section of the third bracket 130, and the plastic beam member 103 includes a tubular portion 103a aligned with and integrally connected to the third bracket 130 through the through holes 102a. That is, an upper opening of the third bracket 130 is aligned with a lower opening of the tubular portion 103a via the through hole 102a, so that the third bracket 130 and the tubular portion 103a form a hollow structure therethrough. According to a non-illustrated embodiment variant, the metal beam member 102 may not extend in the transverse direction to the connection location of the beam body 101 with the third bracket 130, i.e., the beam body 101 may not be provided with a metal material at the connection location with the third bracket 130, but only with a plastic material including the tubular portion 103a. According to another embodiment variant, not illustrated, the upper end of the third bracket 130 connected to the beam body 101 can be arranged to be bent in a direction deviating from the beam body 101, so that the upper end of this third bracket 130 is connected to the plastic beam member 103 outside the closed cross-section of this third bracket 130, whereby, according to this embodiment variant, there is no need to provide the above-mentioned through hole 102a and the tubular portion 103a.

In the configuration shown in FIG. 6B, in the connection location of the beam body 101 with the third bracket 130, the beam body 101 also includes a support 132, for example configured as a T, which passes through the metal beam member 102 and is arranged between the inner side of the metal beam member 102 and the outer side of the tubular portion 103a of the plastic beam member 103, so that a more uniform wall thickness can be obtained for this tubular portion 103a upon injection molding. The support 132 is pre-mounted and fixed to the metal beam 102 prior to the insert injection molding, thus on one hand enhancing the local rigidity of the metal beam 102 and on the other hand preventing the inside of the metal beam 102 from being filled with too much plastic during the forming of the tubular portion 103a, thus reducing the cooling time and reducing the weight of the product.

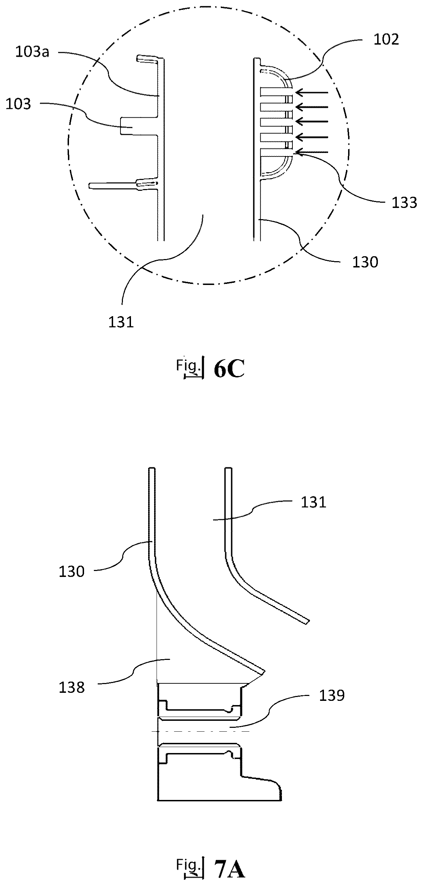

In the configuration shown in FIG. 6C, the metal beam 102 is provided with a plurality of openings 133 for the passage of gas to form a plurality of recesses between the inner side of the metal beam 102 and the outer side of the tubular portion 103a of the plastic beam member 103 at the connection location of the beam body 101 and the third bracket 130. More specifically, in the insert injection molding process, the inner side of the metal beam 102 is filled with a plastic material while gas is injected inwardly through these openings 133, so that a "honeycomb-like" structure is formed between the inner side of the metal beam 102 and the outer side of the tubular portion 103a, so that the weight of the product can be reduced while satisfying the rigidity requirements of the beam body 101.

FIGS. 7A to 7C respectively show three different configurations of the instrument panel beam 100 according to the first embodiment at the connection location of the third bracket 130 with a center tunnel floor (not shown), in which the lower end of the third bracket 130 away from the beam body 101 is provided with a connection projection 138 projecting downward for mounting a fastener, for example, and the connection projection 138 is provided with a connection hole 139 for connecting the third bracket 130 to the center tunnel floor by a bolt passing through the connection hole 139.

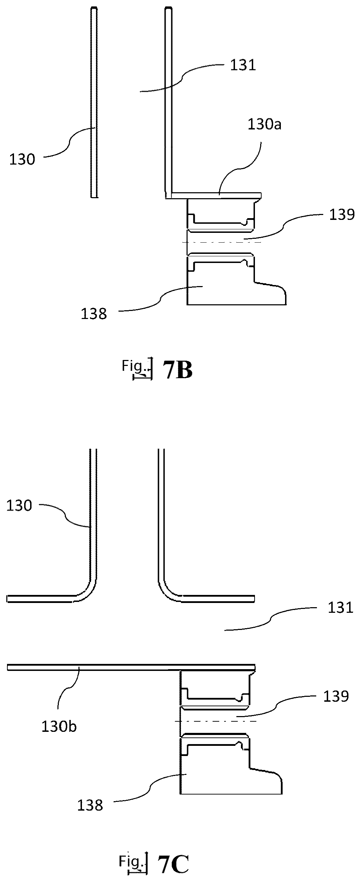

In the configuration shown in FIG. 7A, the lower end of the third bracket 130 is bent in a direction deviated from the connection point of the third bracket 130 with the center tunnel floor, and the connected projection 138 projecting downward is provided outside the closed cross-section of the third bracket 130. In the configuration shown in FIG. 7B, the third bracket 130 is rectilinear above the connection point and includes a connection flange 130a extending laterally for providing the connected projection 138. In the configuration shown in FIG. 7C, the hollow portion 131 of the third bracket 130 is divided into two paths opened toward both sides above the connection point, i.e., the third bracket 130 includes a lateral section 130b located at the bottom of the third bracket 130 and provided with a connected projection 138 at the outside to enhance the self-rigidity of the third bracket 130. In fact, none of these configurations of the lower end of the third bracket 130 is restrictive, and may be selected according to the manufacturing process of the product and the assembly space requirements.

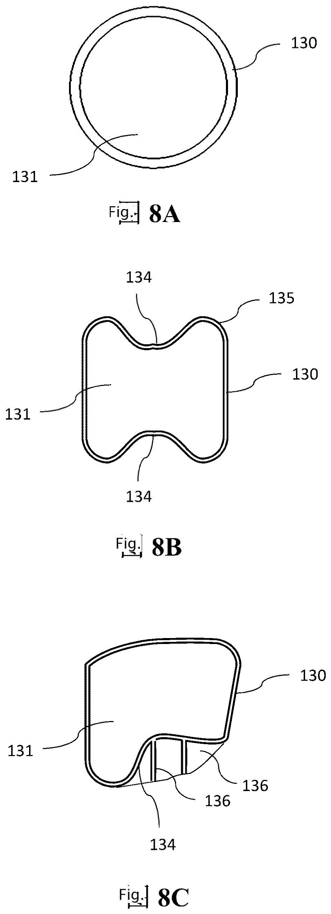

FIGS. 8A to 8C respectively show three different cross-sectional shapes of the third bracket 130 of the instrument panel beam 100 according to the first embodiment. In the configuration shown in FIG. 8A, the shape of the closed cross-section of the third bracket 130 is configured in a regular geometric figure, including one of the circular, elliptical, rectangular, triangular, polygonal, etc. shapes shown. In the configuration shown in FIG. 8B, the shape of the closed cross-section of the third bracket 130 is provided as an irregular shape, for example with recessed features 134 in one or more directions, for reducing in size to provide more design space for other components mounted adjacent to the third bracket 130; correspondingly, a protruding feature 135 is provided at the perimeter of the recessed feature 134 for increasing the stiffness and strength of the third bracket 130 in a particular direction. In the configuration shown in FIG. 8C, the third bracket 130 includes a plurality of reinforcing ribs 136 provided at least partially outside the closed cross-section of the third bracket, such as the plurality of reinforcing ribs 136 shown provided outside the irregular cross-section recessed features 134, for increasing the stiffness of the third bracket 130, partially or entirely.

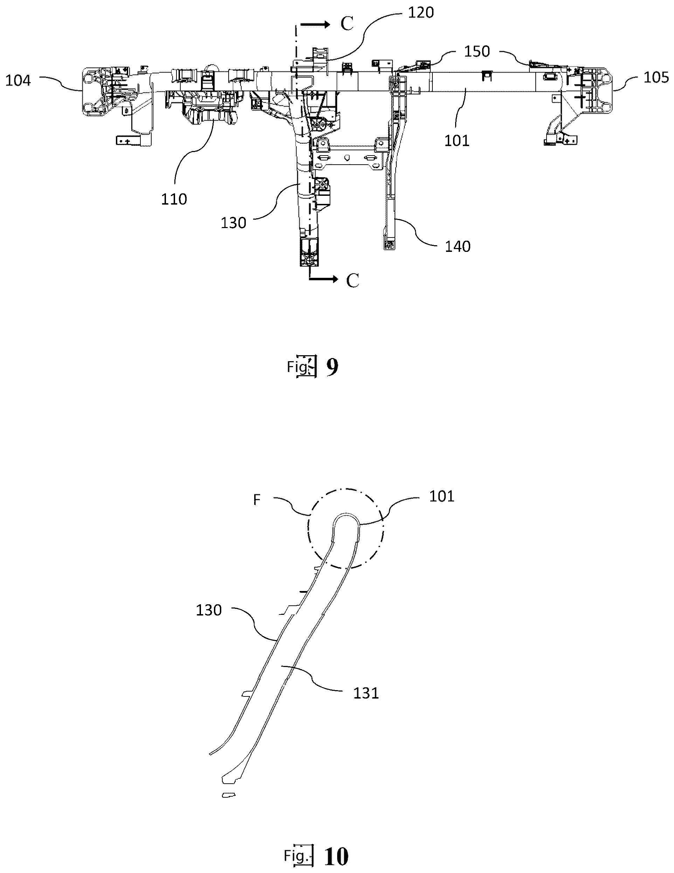

FIGS. 9 to 11B show an instrument panel beam 100 according to a second embodiment of the present invention. The overall construction of the instrument panel beam 100 according to this second embodiment is similar to that of the first embodiment and therefore the same is not repeated, the main difference being that, as shown in particular in FIG. 10, the beam body 101 is made entirely of plastic and is constructed as a tubular beam having a closed cross-section to form a hollow portion, the tubular beam being formed integrally with the third bracket 130 forming the tubular structure, for example, by one of water-assisted injection molding, water-assisted injection molding with projectile, gas-assisted injection molding, gas-assisted and water-assisted combined injection molding.

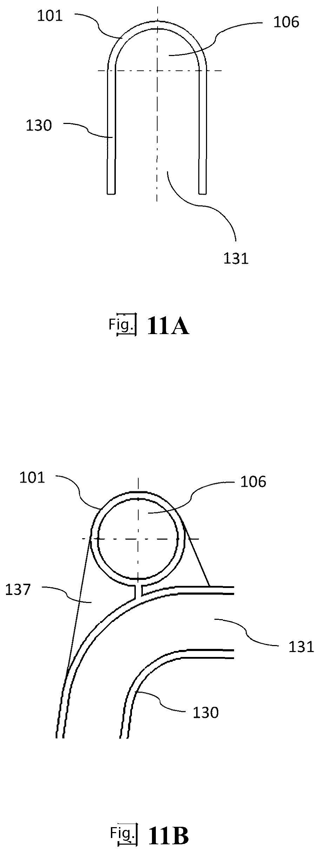

FIGS. 11A and 11B respectively show two different configurations of the instrument panel beam 100 according to the second embodiment at the connection location of the third bracket 130 and the beam body 101.

In the configuration shown in FIG. 11A, the third bracket 130 is perpendicularly connected to the beam body 101 through the upper end thereof such that the hollow portion 106 of the beam body 101 and the hollow portion 131 of the third bracket 130 communicate with each other. In this case, the hollow portion 106 of the beam body 101 and the hollow portion 131 of the third bracket 130 may be co-molded by one of the above-described injection molding processes.

In the configuration shown in FIG. 11B, the upper end of the third bracket 130, which is connected to the beam body 101, is arranged to be bent toward a direction deviated from the beam body 101 such that the hollow portion 106 of the beam body 101 and the hollow portion 131 of the third bracket 130 are independent from each other, i.e., do not communicate with each other. In this case, the third bracket 130 and the beam body 101 may be connected to each other by a reinforcing rib 137, and the hollow portion 131 of the third bracket 130 and the hollow portion 106 of the beam body 101 are separately formed, so that the third bracket 130 and the beam body 101 may be designed to have different wall thicknesses.

From the foregoing, according to the present invention, regardless of the form in which the instrument panel beam 100 includes the beam body 101, by designing at least one bracket for mounting and/or connection extending from the beam body 101 as a tubular structure having a closed cross-section and easy to manufacture, the instrument panel beam 100 can be further reduced in weight while satisfying its own rigidity and strength requirements, thereby effectively achieving the effect of reducing the amount of carbon emission during production and use of the vehicle.

It should be noted that the present invention (e.g., inventive concepts, etc.) has been described in the specification of this patent document and/or shown in the figures according to exemplary embodiments; the embodiments of the present invention are presented by way of example only and are not intended to be limiting the scope of the present invention. The structure and/or arrangement of the elements of the inventive concepts embodied in the present invention as described in the specification and/or shown in the figures is merely illustrative. Although exemplary embodiments of the present invention have been described in detail in this patent document, it will be readily understood by a person skilled in the art that equivalents, modifications, variations, etc. of the subject matter of the exemplary embodiments and alternative embodiments are possible and are considered to be within the scope of the present invention; all such subject matter (e.g., modifications, variations, embodiments, combinations, equivalents, etc.) are intended to be included within the scope of the present invention. It should also be noted that various/other modifications, variations, substitutions, equivalents, changes, omissions, etc. may be made in the configuration and/or arrangement of the exemplary embodiments (e.g., in terms of concept, design, structure, apparatus, form, assembly, construction, means, functions, systems, processes/methods, steps, sequence of process/method steps, operations, operating conditions, properties, materials, compositions, combinations, etc.) without departing from the scope of the present invention; all such subject matter (e.g., amendments, variations, embodiments, combinations, equivalents, etc.) is intended to be included within the scope of the present invention. The scope of the present invention is not intended to be limited to the subject matter (e.g., details, structures, functions, materials, behaviors, steps, sequences, systems, results, etc.) described in the specification and/or FIGS. of this patent document. Considering that the claims of this patent document are to be properly construed to cover the full scope of the inventive subject matter (e.g., including any and all such modifications, variations, embodiments, combinations, equivalents, etc.): it is to be understood that the terminology used in this patent document is intended to provide a description of the subject matter of exemplary embodiments and is not intended as a limitation on the scope of the present invention.

It should also be noted that, according to the exemplary embodiments, the present invention may include conventional techniques (e.g., techniques embodied and/or integrated in the exemplary embodiments, modifications, variations, combinations, equivalents), or may include any other applicable techniques (present and/or future) having the ability to perform the functions and processes/operations described in the specification and/or shown in the figures.

All of these techniques (e.g., techniques implemented in the form of embodiments, modifications, variations, combinations, equivalents, etc.) are considered to be within the scope of the present invention in this patent document.

## Claims

1. An instrument panel beam, comprising:
- a beam body comprising a first end and a second end, the first end and the second end being adapted to be connected to a left-side periphery and a right-side periphery of a vehicle body, respectively; and
- a plurality of brackets extending from the beam body between the first end and the second end, and at least one of the plurality of brackets being adapted to be connected with the vehicle body,
wherein at least one of the plurality of brackets is made of plastic and is configured as a tubular structure having a closed cross-section to form a hollow portion.

2. The instrument panel beam according to claim 1,
wherein the plurality of brackets comprise a first bracket provided adjacent to the first end of the beam body, and the first bracket is adapted to be connected to a front periphery and a steering column of the vehicle body.

3. The instrument panel beam according to claim 1,
wherein the plurality of brackets comprise a second bracket provided adjacent to a central portion of the beam body, and the second bracket is adapted to be connected to the front periphery of the vehicle body.

4. The instrument panel beam according to claim 1,
wherein the plurality of brackets comprise a third bracket and a fourth bracket provided adjacent to a central portion of the beam body, the third bracket and the fourth bracket being adapted to extend toward a floor of the vehicle body, and at least one of the third bracket and the fourth bracket being adapted to be connected to the floor.

5. The instrument panel beam according to claim 1,
wherein the plurality of brackets comprise a fifth bracket provided at a second end of the beam body, the fifth bracket being adapted to mount a passenger side airbag.

6. The instrument panel beam according to claim 1,
wherein the tubular structure is formed by one of water-assisted injection molding, water-assisted injection molding with projectile, gas-assisted injection molding, and gas-assisted and water-assisted combined injection molding.

7. The instrument panel beam according to claim 1,
wherein the closed cross-section of the tubular structure is shaped as a geometric figure comprising one of a circle, an ellipse, a rectangle, a triangle, and a polygon.

8. The instrument panel beam according to claim 1,
wherein the shape of the closed cross-section of the tubular structure is an irregular shape with concave and/or convex features.

9. The instrument panel beam according to claim 1,
wherein the tubular structure comprises reinforcing ribs provided in at least a partial area outside the closed cross-section.

10. The instrument panel beam according to claim 1,
wherein the plurality of brackets comprise a floor-connected bracket provided adjacent to a central portion of the beam body, the floor-connected bracket being adapted to connect to a floor of the vehicle body and support the central portion of the beam body, the floor-connected bracket being made of plastic and configured as the tubular structure.

11. The instrument panel beam according to claim 10,
wherein the floor-connected bracket is integrally formed with the beam body.

12. The instrument panel beam according to claim 1,
wherein the beam body has a non-closed cross-section and comprises a plastic beam member and a metal beam member embedded in the plastic beam member, the plastic beam member being adapted to be connected to a left-side periphery and a right-side periphery of the vehicle body,
respectively, and the metal beam member being adapted to be connected to at least one of the left-side periphery and the right-side periphery of the vehicle body.

13. The instrument panel beam according to claim 12,
wherein the shape of the non-closed cross-section of the beam body comprises one or more of a U-shape, a C-shape, a W-shape, a V-shape, and an Ω-shape.

14. The instrument panel beam according to claim 12,
wherein at least a partial region of the metal beam member is covered by the plastic beam member.

15. The instrument panel beam according to claim 12,
wherein a connection location of the beam body to at least one of the tubular structures in the plurality of brackets is provided with a through hole aligned with the closed cross-section of the tubular structure.

16. The instrument panel beam according to claim 15,
wherein the beam body comprises a tubular portion aligned with and integrally connected to at least one of the tubular structures in the plurality of brackets via the through hole.

17. The instrument panel beam according to claim 16,
wherein the beam body further comprises a support provided at a connection location of the plastic beam member and at least one of the tubular structures in the plurality of brackets, the support passing through the metal beam member and being provided between the metal beam member and the tubular portion of the plastic beam member.

18. The instrument panel beam according to claim 16,
wherein the metal beam is provided with a plurality of openings adapted for the passage of gas to form a plurality of recesses between the metal beam member and the tubular portion of the plastic beam member.

19. The instrument panel beam according to claim 12,
wherein an end of at least one of the tubular structures in the plurality of brackets connected to the beam body is bent toward a direction deviated from the beam body such that the tubular structure is connected to the beam body outside the closed cross-section.

20. The instrument panel beam according to claim 1,
wherein the beam body is made of plastic and is configured as a tube beam having a closed cross-section to form a hollow portion.

21. The instrument panel beam according to claim 20,
wherein the hollow portion of the beam body is connected to the hollow portion of at least one of the tubular structures of the plurality of brackets.

22. The instrument panel beam according to claim 20,
wherein an end of at least one of the tubular structures in the plurality of brackets connected to the beam body is bent toward a direction deviated from the beam body such that the hollow portion of the beam body and the hollow portion of the tubular structure are independent from each other.

23. The instrument panel beam according to claim 1,
wherein an end of at least one of the tubular structures in the plurality of brackets away from the beam body is provided with a connected projection for mounting a fastener.

24. A vehicle, comprising the instrument panel beam according to any one of claims 1 to 23.
